# NEUE EUROPÄISCHE PATENTSCHRIFT

(11) **EP 2 707 213 B2**
(45) Veröffentlichungstag und Bekanntmachung des Hinweises auf die Entscheidung über den Einspruch: **18.12.2024**
(45) Hinweis auf die Patenterteilung: 26.02.2020
(21) Anmeldenummer: 12716251.9
(22) Anmeldetag: 19.04.2012
(51) Int. Cl.: B30B 11/08

(54) **RUNDLÄUFERPRESSE UND VERFAHREN ZUM BETREIBEN EINER RUNDLÄUFERPRESSE**
ROTARY PRESS AND METHOD FOR OPERATING A ROTARY PRESS
PRESSE À PLATEAU TOURNANT ET PROCÉDÉ PERMETTANT DE FAIRE FONCTIONNER UNE PRESSE À PLATEAU TOURNANT

(30) Priorität: 10.05.2011 DE 102011101286
(43) Veröffentlichungstag der Anmeldung: 19.03.2014
(73) Patentinhaber: Fette Compacting GmbH, 21493 Schwarzenbek (DE)
(72) Erfinder: LÜDEMANN, Stefan, 21035 Hamburg (DE); MALICK, Daniel, 22926 Ahrensburg (DE); HÜBNER, Kai, 23909 Ratzeburg (DE)
(74) Vertreter: Hauck Patentanwaltspartnerschaft mbB
(86) Internationale Anmeldenummer: PCT/EP2012/001688
(87) Internationale Veröffentlichungsnummer: WO 2012/152372

(56) Entgegenhaltungen:
- DE-A1- 102009 020 196
- DE-C- 967 423
- DE-C3- 2 639 090
- US-A- 3 891 375
- US-A- 5 350 548
- US-A1- 2009 142 438
- US-A1- 2009 263 532

## Beschreibung

Die Erfindung bezieht sich auf eine Rundläuferpresse, insbesondere eine Rundläufertablettenpresse, mit einem um eine in der Regel vertikale Achse drehbaren Rotor, wobei der Rotor eine obere und eine untere Stempelführung und eine zwischen der oberen und unteren Stempelführung angeordnete Matrizenscheibe umfasst, weiterhin mit oberen und unteren Pressstempeln, die mit Matrizenbohrungen der Matrizenscheibe zusammenwirken, wobei die Rundläuferpresse mehrere Stationen umfasst, nämlich mindestens eine Füllstation, in der zu verpressendes Material in die Matrizenbohrungen gefüllt wird, mindestens eine Dosierstation, in der das in die Matrizenbohrungen gefüllte Material dosiert wird, mindestens eine Druckstation, in der das in die Matrizenbohrungen gefüllte und dosierte Material durch die oberen und unteren Pressstempel zu Presslingen verpresst wird, und mindestens eine Auswerferstation, in der die verpressten Presslinge ausgeworfen werden.

Die Erfindung bezieht sich außerdem auf ein Verfahren zum Betreiben einer Rundläuferpresse, insbesondere eine Rundläufertablettenpresse, mit einem in der Regel um eine vertikale Achse drehbaren Rotor, wobei der Rotor eine obere und eine untere Stempelführung und eine zwischen der oberen und unteren Stempelführung angeordnete Matrizenscheibe umfasst, weiterhin mit oberen und unteren Pressstempeln, die mit Matrizenbohrungen der Matrizenscheibe zusammenwirken, wobei die Rundläuferpresse mehrere Stationen umfasst, nämlich mindestens eine Füllstation, in der zu verpressendes Material in die Matrizenbohrungen gefüllt wird, mindestens eine Dosierstation, in der das in die Matrizenbohrungen gefüllte Material dosiert wird, mindestens eine Druckstation, in der das in die Matrizenbohrungen gefüllte und dosierte Material durch die oberen und unteren Pressstempel zu Presslingen verpresst wird, und mindestens eine Auswerferstation, in der die verpressten Presslinge ausgeworfen werden.

Derartige Rundläuferpressen werden häufig in unterschiedlichen Betriebsmodi genutzt. Beispielsweise können mit solchen Rundläuferpressen in einem ersten Betriebsmodus Einschichttabletten und in einem zweiten Betriebsmodus Zweischichttabletten hergestellt werden. Es gibt Rundläuferpressen, die so gestaltet sind, dass sämtliche prozessrelevanten Stationen im Zuge der Umrüstung in der Rundläuferpresse verbleiben können und dabei neue Prozessfunktionen übernehmen. Bei anderen Rundläuferpressen werden die bei einem Wechsel der Betriebsart nicht mehr oder neu benötigten Prozessstationen aus- bzw. eingebaut. Rundläuferpressen sind beispielsweise bekannt aus DE 10 2007 061 081 B4 oder DE 10 2007 057 791 B4. Bei letzterer sind einzelne Stationen der Presse so ausgestaltet, dass sie in einfacher Weise untereinander ausgetauscht werden können. Eine Rundläuferpresse, bei der sich Stationen in einem Ruhezustand befinden können, ist aus US 5 350 548 A bekannt.

Darüber hinaus ist es im Zuge des Betriebs von Rundläuferpressen manchmal erforderlich, den Rotor für eine Wartung oder einen Austausch aus der Rundläuferpresse auszubauen bzw. in diese einzubauen. Hierfür müssen in der Regel eine oder mehrere Stationen der Rundläuferpresse in aufwendiger Weise demontiert verschoben werden. Dies gilt insbesondere, wenn der Winkelabstand zweier benachbarter Druckstationen derart bemessen ist, dass der Rotor zwischen den Druckstationen nicht hindurchgeführt werden kann. Dies ist beispielsweise bei drei über den Rotorumfang verteilt angeordneten Druckstationen der Fall, wenn letztere zwischen sich beispielsweise einen Winkelabstand größer als 90° aufweisen. Aus WO 2009/112886 A1 sind eine Vorrichtung und ein Verfahren zum Austausch einer Matrizenscheibe bekannt. Es sind Hebemittel vorgesehen, mit denen zumindest eine obere Stempelführung von der Matrizenscheibe abgehoben wird. Weiterhin ist ein Schwenkarm vorgesehen, mit dem anschließend die Matrizenscheibe aus der Presse herausgeschwenkt werden kann.

Mit dem bei bekannten Rundläuferpressen für eine Umrüstung der Rundläuferpresse zwischen unterschiedlichen Betriebsarten erforderlichen Ein- bzw. Ausbau einzelner Stationen ist ein hoher Zeitaufwand verbunden. Darüber hinaus erfolgen diese Arbeiten in der Regel manuell, wobei geschultes Fachpersonal und zum Teil besondere Werkzeuge erforderlich sind. Es besteht außerdem ein Risiko, dass im Zuge der manuellen Umrüstung Bedienfehler auftreten, die den Produktionsprozess beeinträchtigen können. Auch kann es beim Ein- und Ausbau von Stationen zu Beschädigungen der Rundläuferpresse und/oder der Stationen kommen. Dies gilt insbesondere bei dem besonders aufwendigen Ausbau des Rotors einer solchen Rundläuferpresse. Die Flexibilität beim Einsatz solcher Rundläuferpressen ist darüber hinaus beschränkt.

Ausgehend von dem erläuterten Stand der Technik liegt der Erfindung die Aufgabe zugrunde, eine Rundläuferpresse und ein Verfahren der eingangs genannten Art bereitzustellen, mit denen eine Umrüstung der Rundläuferpresse zwischen unterschiedlichen Betriebsarten in schneller, einfacher, flexibler und betriebssicherer Weise möglich ist. Eine weitere Aufgabe besteht darin, einen Rotorein- und -ausbau einfacher, schneller und betriebssicherer zu ermöglichen.

Die Erfindung löst diese Aufgabe durch die Gegenstände der Ansprüche 1 und 8.

Vorteilhafte Ausgestaltungen finden sich in den abhängigen Ansprüchen, der Beschreibung und den Figuren.

Für eine Rundläuferpresse der eingangs genannten Art löst die Erfindung die Aufgabe dadurch, dass mindestens eine der Stationen automatisch aus ihrer Betriebsposition in eine Ruheposition bewegbar ist, in der der Produktionsprozess der Rundläuferpresse zur Herstellung von Presslingen mit den jeweils in einer Betriebsposition verbleibenden Stationen weiterhin möglich ist, die mindestens eine in der Ruheposition befindliche Station den Produktionsprozess jedoch nicht beeinflusst. Für ein Verfahren der eingangs genannten Art löst die Erfindung die Aufgabe durch die Schritte:
- mindestens eine Station wird aus ihrer Betriebsposition automatisch in eine Ruheposition bewegt,
- anschließend wird der Produktionsprozess der Rundläuferpresse mit den jeweils in einer Betriebsposition verbleibenden Stationen fortgesetzt, wobei die in der Ruheposition befindliche Station den Produktionsprozess nicht beeinflusst.

Die Rundläuferpresse kann darüber hinaus in an sich bekannter Weise Steuerkurven bzw. Steuerkurvenelemente zur Führung der Ober- und Unterstempel aufweisen. Im normalen Betrieb der erfindungsgemäßen Rundläuferpresse befinden sich die jeweils aktiven Stationen in ihrer Betriebsposition. Sie nehmen dabei in an sich bekannter Weise Einfluss auf den Produktionsprozess. Erfindungsgemäß ist vorgesehen, dass mindestens eine der Stationen, bevorzugt mehrere, insbesondere sämtliche Stationen der Rundläuferpresse aus der Betriebsposition in eine Ruheposition oder auch Parkposition automatisch bewegt werden können. Es versteht sich, dass die betreffende Station bzw. die betreffenden Stationen aus der Ruheposition auch wieder in die Betriebsposition automatisch bewegbar sind. In der Ruheposition einzelner Stationen ist erfindungsgemäß mit den jeweils in einer Betriebsposition verbleibenden Stationen weiterhin ein ordnungsgemäßer Betrieb der Presse zur Herstellung von Presslingen, z.B. Tabletten, möglich. Die verbleibenden Stationen können dabei in ihrer jeweiligen Betriebsposition verbleiben, in der sie sich vor dem Bewegen der mindestens einen Station in ihre Ruheposition befanden. Es ist jedoch auch möglich, dass eine oder mehrere der verbleibenden Stationen in eine andere Betriebsposition bewegt werden, als die Betriebsposition, in der sie sich vor dem Bewegen der mindestens einen Station in ihre Ruheposition befanden. Die in der Ruheposition befindliche Station nimmt dabei keinen (aktiven) Einfluss mehr auf den Produktionsprozess der Rundläuferpresse. So kann sich die Station in dieser Ruheposition beispielsweise außer Eingriff mit den Ober- und Unterstempeln befinden. Auch können sich ein oder mehrere der jeweiligen Station zugeordnete, eine in der Betriebsposition erforderliche axiale Verschiebung der Ober- und Unterstempel generierende Kurvenelemente gleichfalls außer Eingriff mit den Ober- und Unterstempeln befinden und beispielsweise durch ein oder mehrere Übergangskurvenelemente substituiert sein. Dies bedeutet, dass der Prozess zur Herstellung von Presslingen in der Rundläuferpresse ohne die in die Ruheposition bewegte Station ordnungsgemäß fortgeführt wird. Handelt es sich bei der Station beispielsweise um eine Dosierstation, so erfolgt in der Ruheposition bzw. Parkposition keine Dosierung mehr durch diese Dosierstation. Handelt es sich bei der Station beispielsweise um eine Druckstation, so erfolgt in der Ruheposition bzw. Parkposition durch diese Druckstation keine Druckausübung mehr auf die Pressstempel. Die für den Produktionsprozess erforderliche Dosierung und Verpressung erfolgt dann durch andere Dosier- und Druckstationen der Rundläuferpresse.

Während es grundsätzlich möglich ist, dass sämtliche Stationen der Rundläuferpresse in eine Ruheposition bewegbar sind, kann vorgesehen sein, dass (nur) die Druckstationen und die Dosierstationen und gegebenenfalls die Füllstationen in eine Ruheposition bewegbar sind. Dies sind die Stationen, die bei einem Wechsel der Betriebsart, beispielsweise bei einem Wechsel zwischen der Herstellung von Einschichttabletten zu Mehrschichttabletten, in der Regel aus- oder eingebaut werden müssen.

Die erfindungsgemäß vorgesehene Ruheposition erlaubt einen flexiblen Einsatz einzelner Stationen der Rundläuferpresse, ohne dass ein aufwändiger Ein- oder Ausbau der Stationen erforderlich ist. Vielmehr wird ein grundlegend neues Maschinenkonzept ermöglicht, bei dem die Rundläuferpresse durch Vorsehen geeigneter Stationen in einfacher Weise auf unterschiedliche Produktionszustände eingestellt werden kann. Beispielsweise sind mit einer Rundläuferpresse mit drei Druckstationen drei verschiedene Produktionsarten zur Herstellung einer Einschichttablette ebenso möglich wie die Einstellung der Rundläuferpresse zur Herstellung von Zweischichttabletten. Die Umrüstbarkeit der Rundläuferpresse zwischen den verschiedenen Betriebsmodi ist flexibel und schnell durchführbar. Der Produktionsprozess muss nur kurzzeitig unterbrochen werden, um die betreffende Station bzw. die betreffenden Stationen in die Ruheposition zu bewegen oder aus der Ruheposition wieder in die Betriebsposition zu bewegen. Anschließend kann die Rundläuferpresse wieder in dem neuen Betriebsmodus betrieben werden, während die betreffenden in ihre jeweilige Ruheposition verbrachten Stationen in dieser Ruheposition verbleiben.

Die Rundläuferpresse kann ein Gehäuse aufweisen, in dem der Rotor und die Stationen angeordnet sind. Nach einer Ausgestaltung kann die mindestens eine Station sich in der Ruheposition weiterhin innerhalb des Gehäuses befinden. Die Station wird also innerhalb des Gehäuses aus der Betriebsposition in ihre Ruheposition und umgekehrt bewegt. In der Betriebsposition befinden sich die Stationen ohnehin innerhalb des Gehäuses. Indem die Stationen auch in ihrer Ruheposition innerhalb des Gehäuses positioniert sind, kann die Rundläuferpresse nach dem Bewegen einer oder mehrerer Stationen in die Ruheposition bei geschlossenem Gehäuse weiterbetrieben werden. Ein Öffnen des Gehäuses der Rundläuferpresse ist dabei nur gegebenenfalls für den Wechsel zwischen jeweiliger Betriebsposition und entsprechender Ruheposition und umgekehrt erforderlich, falls das Bewegen der entsprechenden Station zwischen Betriebs- und Ruheposition durch manuellen Eingriff erfolgt. Erfolgt die Bewegung der betreffenden Station dagegen automatisch ohne manuellen Eingriff an der Station, kann das Gehäuse für diesen Vorgang geschlossen bleiben. Dasselbe gilt für einen gegebenenfalls erforderlichen Austausch von Kurvenelementen, die der in der Ruheposition befindlichen Station zugeordnet sind durch Übergangskurvenelemente. Sofern auch dies selbsttätig vollzogen wird und nicht händisch durch Fachpersonal durchgeführt werden muss, kann auf ein Öffnen des Gehäuses gänzlich verzichtet werden. Eine diesbezügliche Umrüstung der Rundläuferpresse ist insbesondere bei Anwendungen in der pharmazeutischen Industrie vorteilhaft, bei denen äußerst hohe Anforderungen an die Produktreinheit gestellt werden.

Die Rundläuferpresse kann mehrere Füllstationen und/oder oder mehrere Dosierstationen und/oder mehrere Druckstationen aufweisen, wobei mehrere der Füllstationen und/oder Dosierstationen und/oder Druckstationen, bevorzugt sämtliche der Füllstationen und/oder Dosierstationen und/oder Druckstationen, in die Ruheposition bewegbar sind. Es versteht sich, dass für den ordnungsgemäßen Weiterbetrieb der Rundläuferpresse jeweils eine Füllstation, eine Dosierstation und eine Druckstation in ihrer Betriebsposition verbleiben müssen.

Erfindungsgemäß besitzt die mindestens eine Station in ihrer Ruheposition in Axialrichtung des Rotors gesehen einen größeren Abstand von der Matrizenscheibe als in ihrer Betriebsposition. Die mindestens eine Station wird beim Bewegen in ihre Ruheposition also in Axialrichtung des Rotors weiter von der Matrizenscheibe entfernt. Auf diese Weise wird ein ordnungsgemäßer Weiterbetrieb der Rundläuferpresse in besonders einfacher Weise möglich, ohne dass die in der Ruheposition befindliche Station den Prozess beeinflusst. Die mindestens eine Druckstation kann eine oberhalb der Matrizenscheibe angeordnete obere Druckrolle und eine unterhalb der Matrizenscheibe angeordnete untere Druckrolle aufweisen. Die Druckrollen können dann aus ihrer Betriebsposition in eine Ruheposition bewegbar sein bzw. bewegt werden, in der sie in Axialrichtung des Rotors wiederum einen größeren Abstand von der Matrizenscheibe besitzen als in ihrer Betriebsposition. Wiederum werden zum Bewegen der Druckstation in die Ruheposition also die Druckrollen in axialer Richtung von der Matrizenscheibe weiter entfernt. Es versteht sich, dass bei mehreren Druckstationen sämtliche Druckstationen der Rundläuferpresse solche Druckrollen aufweisen können.

Das Bewegen der mindestens einen Station aus der Betriebsposition in die Ruheposition und umgekehrt kann manuell erfolgen. Erfindungsgemäß umfasst die Rundläuferpresse Antriebsmittel, mit denen die mindestens eine Station zwischen ihrer Betriebsposition und ihrer Ruheposition bewegbar ist bzw. bewegt wird. Derartige Antriebsmittel können beispielsweise elektrische oder hydraulische Antriebsmittel sein. Die Antriebsmittel können z.B. über die Maschinensteuerung der Rundläuferpresse oder die Bedienstation der Rundläuferpresse angesteuert werden. Es ist auch ein automatisches Verfahren einzelner Stationen zwischen der Betriebsposition und der Ruheposition möglich, beispielsweise abhängig von einer vorgegebenen Betriebsart der Presse, z.B. einem Einschicht- oder einem Mehrschichttablettenproduktionsprozess. Die Betriebsart kann durch eine Bedienperson der Rundläuferpresse vorgegeben werden. Um sicherzustellen, dass die jeweilige Station in der Ruheposition den Produktionsprozess nicht unerwünscht beeinflussen kann, können weiterhin Arretiermittel vorgesehen sein, mit denen die mindestens eine Station in ihrer Ruheposition arretiert werden kann bzw. arretiert wird. Das vorgenannte automatische Verfahren einzelner Stationen zwischen der Betriebsposition und der Ruheposition kann auch die Substitution von den Stationen zugeordneten Kurvenelementen, die sich im Eingriff mit den Ober- und Unterstempeln befinden, durch Übergangskurvenelemente und umgekehrt umfassen.

Nach einer weiteren Ausgestaltung kann der Rotor für einen Ein- und Ausbau zugänglich sein, wenn sich mindestens eine der Stationen in der Ruheposition befindet. Entsprechend kann nach dem Bewegen mindestens einer Station in die Ruheposition der Rotor ein- und/oder ausgebaut werden. Dadurch kann der Winkelabstand zwischen verbleibenden Stationen derart vergrößert werden, dass der Ausbau des Rotors gegebenenfalls ohne eine Demontage von Stationen der Rundläuferpresse, beispielsweise von Druckstationen oder Dosierstationen, erfolgen kann oder erfolgt. Dies gilt insbesondere wenn eine oder mehrere, insbesondere sämtliche Druckstationen bzw. Druckrollen der Rundläuferpresse sich in ihrer Ruheposition befinden. Besonders bei großen Winkelabständen zwischen zwei Druckstationen im vorstehend beschriebenen Sinne, z.B. größer als 90°, ist dies von erheblichem Vorteil, da in einem solchen Fall bislang die Druckstationen in aufwendiger Weise demontiert werden mussten.

Das erfindungsgemäße Verfahren kann mit der erfindungsgemäßen Rundläuferpresse durchgeführt werden. Entsprechend kann die erfindungsgemäße Rundläuferpresse zur Durchführung des erfindungsgemäßen Verfahrens geeignet sein.

Ein Ausführungsbeispiel der Erfindung wird nachfolgend anhand von Figuren näher erläutert. Es zeigen schematisch:
- Fig. 1: einen Teil einer erfindungsgemäßen Rundläuferpresse in einer in die Zeichnungsebene abgewickelten Darstellung in einem ersten Betriebszustand,
- Fig. 2: die in Fig. 1 dargestellte Rundläuferpresse in einem zweiten Betriebszustand,
- Fig. 3: die in Fig. 1 dargestellte Rundläuferpresse in einem dritten Betriebszustand,
- Fig. 4: die in Fig. 1 dargestellte Rundläuferpresse in einem vierten Betriebszustand, und
- Fig. 5: die in Fig. 1 dargestellte Rundläuferpresse in einem fünften Betriebszustand.

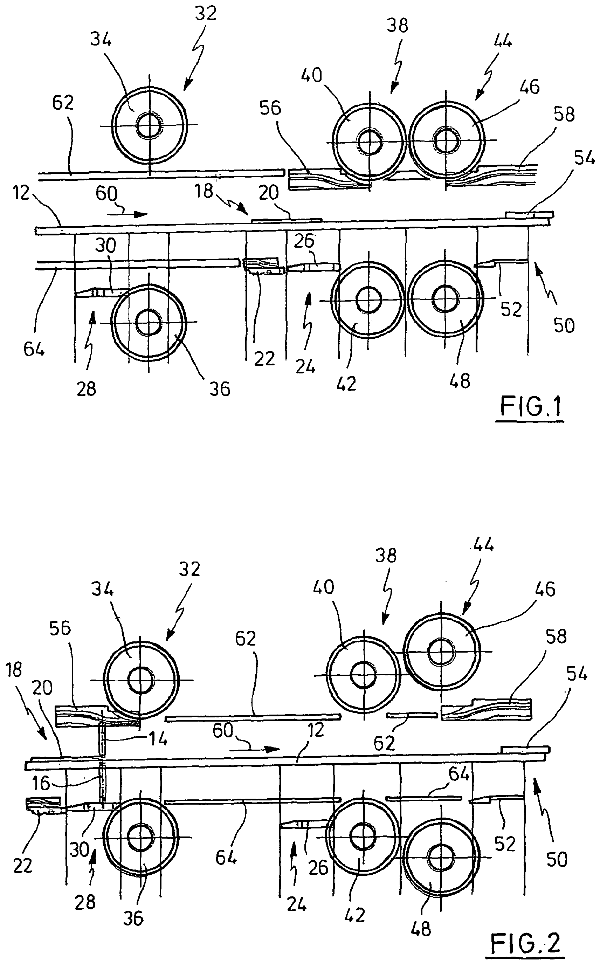

Soweit nichts anderes angegeben ist, bezeichnen in den Figuren gleiche Bezugszeichen gleiche Gegenstände. Die in Fig. 1 dargestellte erfindungsgemäße Rundläuferpresse umfasst einen mittels eines nicht näher dargestellten Antriebs um eine in der Regel vertikale Achse drehbaren Rotor, der in an sich bekannter Weise eine ebenfalls nicht näher dargestellte obere und untere Stempelführung umfasst, zwischen denen eine Matrizenscheibe 12 angeordnet ist. Die Matrizenscheibe 12 besitzt mehrere ebenfalls nicht näher dargestellte Matrizenbohrungen, mit denen in an sich bekannter Weise obere und untere Pressstempel zusammenwirken, wie beispielsweise in den Figuren 2 bis 4 anhand eines Stempelpaares aus Oberstempel 14 und Unterstempel 16 veranschaulicht. Es versteht sich, dass die Rundläuferpresse eine Vielzahl solcher Ober- und Unterstempel 14, 16 umfasst entsprechend der Anzahl von Matrizenbohrungen der Matrizenscheibe 12. Der grundsätzliche Aufbau einer solchen Rundläuferpresse ist an sich bekannt und soll daher nicht im Detail erläutert werden.

Die Rundläuferpresse umfasst Kurvenelemente als Teil von Führungskurven für die Ober- und Unterstempel sowie mehrere Stationen. Wie in Fig. 1 zu erkennen, umfasst die Rundläuferpresse insbesondere eine Füllstation 18 mit einer Fülleinrichtung 20, in der pulverförmiges Material in die Matrizenbohrungen der Matrizenscheibe 12 gefüllt wird. Die Füllstation 18 umfasst außerdem ein Füllkurvenelement 22, durch das die Unterstempel 16 vor dem Befüllen der Matrizenbohrungen geführt werden. Die Rundläuferpresse weist darüber hinaus eine erste Dosierstation 24 mit einem ersten Dosierkurvenelement 26 auf, welches die Höhe der Unterstempel 16 abhängig von der gewünschten Dosierung in den Matrizenbohrungen vorgibt. Die Rundläuferpresse besitzt ferner eine zweite Dosierstation 28, die ein zweites Dosierkurvenelement 30 umfasst. Die Rundläuferpresse umfasst weiterhin eine erste Druckstation 32 mit einer oberen Druckrolle 34 und einer unteren Druckrolle 36, eine zweite Druckstation 38 mit einer oberen Druckrolle 40 und einer unteren Druckrolle 42 und eine dritte Druckstation 44 mit einer oberen Druckrolle 46 und einer unteren Druckrolle 48. Im Betrieb wirken die oberen und unteren Druckrollen 34, 40, 46 bzw. 36, 42, 48 der Druckstation 32, 38, 44 in an sich bekannter Weise mit den Ober- und Unterstempeln 14, 16 zusammen, um das in der Füllstation 18 und den Dosierstationen 24, 28 in die Matrizenbohrungen gefüllte und dosierte Material zu Presslingen bzw. Tabletten zu verpressen. Schließlich umfasst die Rundläuferpresse eine Auswerferstation 50 mit einem Auswerferkurvenelement 52 und einem Abstreiferelement 54. In ebenfalls an sich bekannter Weise führt das Auswerferkurvenelement 52 die Unterstempel 16 nach oben, so dass diese die verpressten Tabletten auf die Oberseite der Matrizenscheibe 12 befördern, wo sie von dem Abstreiferelement 54 beispielsweise einem Tablettenablaufkanal zugeführt werden. Die Rundläuferpresse weist weiterhin Druckkurvenelemente 56, 58 auf, wobei das Druckkurvenelement 56 die Oberstempel 14 vor der zweiten Druckstation 38 axial führt und das Drucckurvenelement 58 die Oberstempel nach 14 Austritt aus der dritten Druckstation 44 führt. Im Betrieb wird der Rotor der Rundläuferpresse, insbesondere die Matrizenscheibe 12, mit den Ober- und Unterstempelführungen und den Ober- und Unterstempeln 14, 16 um eine in der Regel vertikale Achse rotiert, wie durch den Pfeil 60 in Fig. 1 veranschaulicht.

Bei der in den Figuren 1 bis 5 dargestellten Rundläuferpresse sind sämtliche Druckstationen 32, 38, 44 und sämtliche Dosierstationen 24, 28 zwischen ihrer Betriebsposition und einer Ruheposition bewegbar. In dem gezeigten Beispiel werden die Stationen zum Bewegen aus der Betriebsposition in die Ruheposition in Axialrichtung des Rotors bzw. der Matrizenscheibe 12 gesehen von letzterer entfernt. In dem ersten Betriebszustand gemäß Fig. 1 befindet sich insbesondere die erste Druckstation 32 in der Ruheposition. Dazu wurden die obere Druckrolle 34 und untere Druckrolle 36 dieser ersten Druckstation 32 nach oben bzw. unten von der Matrizenscheibe 12 weiter entfernt bzw. weiter beabstandet. In Fig. 1 ist unmittelbar zu erkennen, dass die zweite und dritte Druckstation 38, 44, insbesondere ihre Druckrollen 40, 42, 46, 48, näher an der Matrizenscheibe 12 angeordnet sind, als die Druckrollen 34, 36 der ersten Druckstation 32. Im Bereich der in der Ruheposition befindlichen ersten Druckstation 32 sind obere und untere Übergangskurvenelement 62, 64 eingesetzt. Diese Übergangskurvenelemente 62, 64 substituieren in der Ruheposition die in der Betriebsposition der jeweiligen Station zugeordneten Kurvenelemente 56 und 22, 30. Zu diesem Zweck müssen diese Kurvenelemente 56, 22, 30 die die Ober- und Unterstempel 14, 16 axial führen, außer Eingriff mit letzteren gebracht und durch die Übergangskurvenelemente 62, 64, die nunmehr die nicht mehr vorhandenen Kurvenelemente 56, 22, 30 überbrücken müssen, substituiert werden. Diese Substitution kann durch das Fachpersonal händisch durchgeführt werden. Es ist aber auch eine vollautomatische Substitution möglich.

Darüber hinaus befindet sich in dem in Fig. 1 gezeigten ersten Betriebszustand auch die zweite Dosierstation 28 in ihrer Ruheposition. Auch diese Dosierstation 28, insbesondere das zweite Dosierkurvenelement 30, wurde in Axialrichtung, in Fig. 1 nach unten von dem Rotor bzw. der Matrizenscheibe 12 entfernt. Wiederum ist unmittelbar ersichtlich, dass die erste Dosierstation 24 in Fig. 1 näher an der Matrizenscheibe 12 angeordnet ist als die zweite Dosierstation 28.

Wird die in Fig. 1 gezeigte Rundläuferpresse nun betrieben, so wirken in dem Prozess nur die erste Dosierstation 24 und die zweite und dritte Druckstation 38, 44 neben der Füllstation 18 und der Auswerferstation 50 am Prozess mit. Die erste Druckstation 32 und die zweite Dosierstation 28 hingegen nehmen in der in Fig. 1 gezeigten Ruheposition keinen Einfluss auf den Produktionsprozess. Hierfür ist keine Demontage der betreffenden Stationen erforderlich. Vielmehr besitzt die Rundläuferpresse ein in Fig. 1 nicht dargestelltes Gehäuse, wobei sämtliche zwischen einer Betriebsposition und einer Ruheposition bewegbaren Stationen der Rundläuferpresse auch in ihrer Ruheposition innerhalb des Gehäuses verbleiben.

In Fig. 2 ist ein zweiter Betriebszustand der in Fig. 1 gezeigten Rundläuferpresse gezeigt. Dabei befindet sich die erste Druckstation 32 in ihrer Betriebsposition. Hierzu wurde sie gegenüber der Darstellung in Fig. 1 in axialer Richtung auf die Matrizenscheibe 12 zugestellt. Insbesondere wurden die Druckrollen 34, 36 in Richtung der Matrizenscheibe 12 bewegt. Darüber hinaus wurde die zweite Dosierstation 28 in ihre Betriebsposition bewegt, indem das zweite Dosierkurvenelement 30 in Richtung zu der Matrizenscheibe 12 bewegt wurde. Im Unterschied zu Fig. 1 ist in Fig. 2 die dritte Druckstation 44 in ihre Ruheposition bewegt worden, wofür wiederum die Druckrollen 46, 48 von der Matrizenscheibe 12 weiter entfernt bzw. weiter beabstandet wurden. Gleiches gilt für die erste Dosierstation 24, die ebenfalls in ihre Ruheposition bewegt wurde, indem das Dosierkurvenelement 26 von der Matrizenscheibe 12 weiter entfernt bzw. weiter beabstandet wurde. Stattdessen wurde ein Übergangskurvenelement 64 eingesetzt. Anstelle des ersten Druckkurvenelements 56 wurde oberhalb der Matrizenscheibe 12 das Übergangskurvenelement 62 eingesetzt. Die Aufgabe der Übergangskurvenelemente 62, 64 wurde vorstehend bereits erläutert. Das beschriebene Substitutionsprinzip kann grundsätzlich und sinngemäß auf alle Stationen, die aus einer Betriebs- in eine Ruheposition verfahren werden, übertragen werden. Ein erstes Druckkurvenelement 56 befindet sich nun vor der ersten Druckstation 32. Darüber hinaus wurde die Füllstation 18 einschließlich ihrer Fülleinrichtung 20 und dem Füllkurvenelement 22 vor der zweiten Dosierstation 28 positioniert. Wiederum ist in dem in Fig. 2 gezeigten zweiten Betriebszustand ein ordnungsgemäßer Betrieb der Rundläuferpresse möglich.

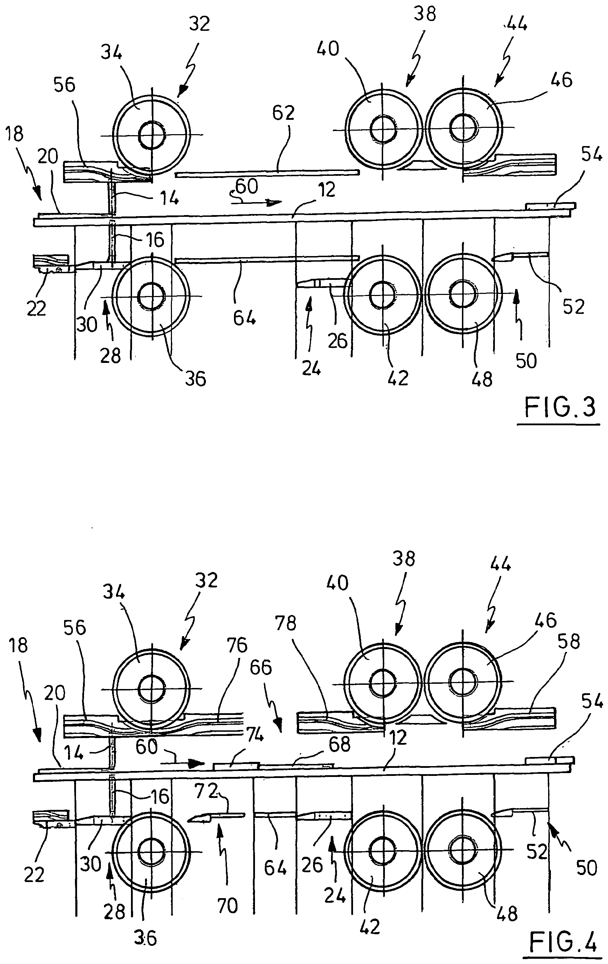

Fig. 3 zeigt einen weiteren, einen dritten Betriebszustand der Rundläuferpresse. In diesem Betriebszustand befinden sich bis auf die erste Füllstation 24 mit dem ersten Füllkurvenelement 26 sämtliche Stationen der Rundläuferpresse in ihrer Betriebsposition. Wiederum ist in diesem Betriebszustand ein ordnungsgemäßer Betrieb der Rundläuferpresse möglich.

In den in den Figuren 1 bis 3 dargestellten Betriebszuständen der Rundläuferpresse können in unterschiedlichen Konfigurationen Tabletten im Einschichtbetrieb hergestellt werden.

In Fig. 4 ist ein anderer, ein vierter Betriebszustand gezeigt, in dem mit der Rundläuferpresse Zweischichttabletten hergestellt werden können. Dazu befinden sich sämtliche Stationen der Rundläuferpresse in ihrer Betriebsposition. Zusätzlich ist eine zweite Füllstation 66 mit einer zweiten Fülleinrichtung 68 zwischen der ersten Druckstation 32 und der zweiten Druckstation 38 angeordnet. Im Betrieb wird in der ersten Füllstation 18 ein erstes pulverförmiges Material in die Matrizenbohrungen gefüllt und in der zweiten Dosierstation 28 dosiert, wobei das Material anschließend in der ersten Druckstation 32 vorkomprimiert wird. Anschließend wird in der zweiten Füllstation 66 mit der zweiten Fülleinrichtung 68 ein zweites pulverförmiges Material auf die vorkomprimierten Presslinge aus dem ersten pulverförmigen Material gefüllt und in der ersten Dosierstation 24 dosiert. Anschließend erfolgt die Verpressung zu einer Zweischichttablette in der zweiten und dritten Druckstation 38, 44, wobei in der zweiten Druckstation 38 eine Vorverpressung und in der dritten Druckstation 44 die Endverpressung der Zweischichttablette erfolgt. Danach können die so hergestellten Zweischichttabletten in der Auswerferstation 50 ausgeworfen werden. In Fig. 4 ist darüber hinaus eine zweite Auswerferstation 70 mit einem zweiten Auswerferkurvenelement 72 und einem zweiten Abstreiferelement 74 gezeigt. Hier können optional Presslinge nach dem Einfüllen und Vorkomprimieren des ersten pulverförmigen Materials ausgeworfen werden, beispielsweise zu einer Prüfstation. Es sei noch erwähnt, dass in dem Betriebszustand in Fig. 4 weitere Druckkurvenelemente 76, 78 zwischen der ersten Druckstation 32 und der zweiten Druckstation 38 angeordnet sind.

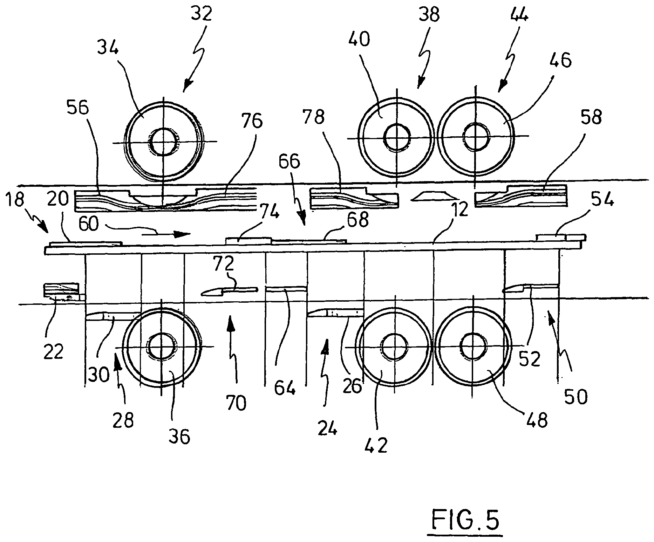

In Fig. 5 ist ein fünfter Betriebszustand der Rundläuferpresse gezeigt, der zum Ausbau des Rotors, insbesondere der Matrizenscheibe 12 mit den Ober- und Unterstempelführungen, dient. Hierzu wurden sämtliche Dosierstationen 24, 28 und sämtliche Druckstationen 32, 38, 44 in ihre Ruheposition bewegt. In diesem Zustand kann in einfacher Weise ein Rotorwechsel erfolgen, ohne dass die Dosierstationen 24, 28 oder Druckstationen 32, 38, 44 demontiert werden müssen.

Sämtliche zwischen einer Betriebsposition und einer Ruheposition bewegbaren Stationen der Rundläuferpresse können manuell oder erfindungsgemäß mittels geeigneter Antriebe, beispielsweise elektrischer oder hydraulischer Antriebe, zwischen der Ruhe- und der Betriebsposition automatisch bewegt werden. Weiterhin können Arretiermittel vorgesehen sein, mit denen die Stationen in der Ruheposition arretiert werden können. Das Bewegen der einzelnen Stationen zwischen der Betriebsposition und der Ruheposition kann bei Vorsehen geeigneter Antriebe automatisch erfolgen, beispielsweise durch die Maschinensteuerung der Rundläuferpresse. So kann abhängig von dem jeweils gewählten Betriebsmodus der Presse eine automatische Bewegung der Stationen in ihre Betriebs- oder Ruheposition erfolgen.

## Patentansprüche

1. Rundläuferpresse mit einem Rotor, wobei der Rotor eine obere und eine untere Stempelführung und eine zwischen der oberen und unteren Stempelführung angeordnete Matrizenscheibe (12) umfasst, weiterhin mit oberen und unteren Pressstempeln (14, 16), die mit Matrizenbohrungen der Matrizenscheibe (12) zusammenwirken, wobei die Rundläuferpresse mehrere Stationen umfasst, nämlich mindestens eine Füllstation (18, 66), in der zu verpressendes Material in die Matrizenbohrungen gefüllt wird, mindestens eine Dosierstation (24, 28), in der das in die Matrizenbohrungen gefüllte Material dosiert wird, mindestens eine Druckstation (32, 38, 44), in der das in die Matrizenbohrungen gefüllte und dosierte Material durch die oberen und unteren Pressstempel (14, 16) zu Presslingen verpresst wird, und mindestens eine Auswerferstation (50, 70), in der die verpressten Presslinge ausgeworfen werden, **dadurch gekennzeichnet, dass** Antriebsmittel vorgesehen sind, mit denen mindestens eine der Stationen automatisch zwischen ihrer Betriebsposition und einer Ruheposition bewegbar ist, in der der Produktionsprozess der Rundläuferpresse zur Herstellung von Presslingen mit den jeweils in einer Betriebsposition verbleibenden Stationen weiterhin möglich ist, die mindestens eine in der Ruheposition befindliche Station den Produktionsprozess jedoch nicht beeinflusst, wobei die mindestens eine Station in ihrer Ruheposition in Axialrichtung des Rotors einen größeren Abstand von der Matrizenscheibe (12) besitzt als in ihrer Betriebsposition.

2. Rundläuferpresse nach Anspruch 1, **dadurch gekennzeichnet, dass** die Rundläuferpresse ein Gehäuse aufweist, in dem der Rotor und die Stationen angeordnet sind, wobei die mindestens eine Station sich in der Ruheposition weiterhin innerhalb des Gehäuses befindet.

3. Rundläuferpresse nach einem der vorhergehenden Ansprüche, **dadurch gekennzeichnet, dass** die Rundläuferpresse mehrere Füllstationen (18, 66) und/oder mehrere Dosierstationen (24, 28) und/oder mehrere Druckstationen (32, 38, 44) aufweist, wobei mehrere der Füllstationen (18, 66) und/oder Dosierstationen (24, 28) und/oder Druckstationen (32, 38, 44), bevorzugt sämtliche der Füllstationen (18, 66) und/oder Dosierstationen (24, 28) und/oder Druckstationen (32, 38, 44) in die Ruheposition bewegbar sind.

4. Rundläuferpresse nach einem der vorhergehenden Ansprüche, **dadurch gekennzeichnet, dass** die mindestens eine Druckstation (32, 38, 44) eine oberhalb der Matrizenscheibe (12) angeordnete Druckrolle (34, 40, 46) und eine unterhalb der Matrizenscheibe (12) angeordnete Druckrolle (36, 42, 48) aufweist, wobei die Druckrollen (34, 36, 40, 42, 46, 48) aus ihrer Betriebsposition in eine Ruheposition bewegbar sind, in der sie in Axialrichtung des Rotors einen größeren Abstand von der Matrizenscheibe (12) besitzen als in ihrer Betriebsposition.

5. Rundläuferpresse nach einem der vorhergehenden Ansprüche, **dadurch gekennzeichnet, dass** Arretiermittel vorgesehen sind, mit denen die mindestens eine Station in ihrer Ruheposition arretiert werden kann.

6. Rundläuferpresse nach einem der vorhergehenden Ansprüche, **dadurch gekennzeichnet, dass** der Rotor für einen Ein- und/oder Ausbau zugänglich ist, wenn sich mindestens eine der Stationen in der Ruheposition befindet.

7. Rundläuferpresse nach einem der vorhergehenden Ansprüche, **dadurch gekennzeichnet, dass** im Zuge der Überführung der mindestens einen Station aus ihrer Betriebs- in eine Ruheposition mindestens ein der Station zugeordnetes Kurvenelement durch mindestens ein Übergangskurvenelement substituiert wird.

8. Verfahren zum Betreiben einer Rundläuferpresse mit einem Rotor, wobei der Rotor eine obere und eine untere Stempelführung und eine zwischen der oberen und unteren Stempelführung angeordnete Matrizenscheibe (12) umfasst, weiterhin mit oberen und unteren Pressstempeln (14, 16), die mit Matrizenbohrungen der Matrizenscheibe (12) zusammenwirken, wobei die Rundläuferpresse mehrere Stationen umfasst, nämlich mindestens eine Füllstation (18, 66), in der zu verpressendes Material in die Matrizenbohrungen gefüllt wird, mindestens eine Dosierstation (24, 28), in der das in die Matrizenbohrungen gefüllte Material dosiert wird, mindestens eine Druckstation (32, 38, 44), in der das in die Matrizenbohrungen gefüllte und dosierte Material durch die oberen und unteren Pressstempel (14, 16) zu Presslingen verpresst wird, und mindestens eine Auswerferstation (50, 70), in der die verpressten Presslinge ausgeworfen werden, **gekennzeichnet durch** die Schritte:
- mindestens eine Station wird mittels Antriebsmitteln automatisch aus ihrer Betriebsposition in eine Ruheposition bewegt, wobei die mindestens eine Station zum Bewegen in ihre Ruheposition in Axialrichtung des Rotors von der Matrizenscheibe (12) weiter beabstandet wird,
- anschließend wird der Produktionsprozess der Rundläuferpresse mit den jeweils in einer Betriebsposition verbleibenden Stationen fortgesetzt, wobei die in der Ruheposition befindliche Station den Produktionsprozess nicht beeinflusst.

9. Verfahren nach Anspruch 8, **dadurch gekennzeichnet, dass** die mindestens eine Station innerhalb eines den Rotor und die Stationen aufnehmenden Gehäuses der Rundläuferpresse in ihre Ruheposition bewegt wird.

10. Verfahren nach einem der Ansprüche 8 oder 9, **dadurch gekennzeichnet, dass** eine oberhalb der Matrizenscheibe (12) angeordnete obere Druckrolle (34, 40, 46) und eine unterhalb der Matrizenscheibe (12) angeordnete untere Druckrolle (36, 42, 48) mindestens einer Druckstation (32, 38, 44) zum Bewegen in ihre Ruheposition in Axialrichtung des Rotors von der Matrizenscheibe (12) weiter beabstandet werden.

11. Verfahren nach einem der Ansprüche 8 bis 10, **dadurch gekennzeichnet, dass** die mindestens eine Station in ihrer Ruheposition arretiert wird.

12. Verfahren nach einem der Ansprüche 8 bis 11, **dadurch gekennzeichnet, dass** nach dem Bewegen mindestens einer Station in die Ruheposition der Rotor ein- und/oder ausgebaut wird.

13. Verfahren nach einem der Ansprüche 8 bis 12, **dadurch gekennzeichnet, dass** im Zuge der Überführung der mindestens einen Station aus ihrer Betriebsin eine Ruheposition mindestens ein der Station zugeordnete Kurvenelement durch mindestens ein Übergangskurvenelement substituiert wird.

## Claims

1. A rotary press having a rotor, wherein the rotor comprises an upper and a lower punch guide and a die plate (12) arranged between the upper and lower punch guides, furthermore having upper and lower press punches (14, 16) which interact with die bores in the die plate (12), wherein the rotary press comprises a plurality of stations, namely at least one filling station (18, 66) in which material to be compressed is filled into the die bores, at least one metering station (24, 28) in which the material filled into the die bores is metered, at least one pressing station (32, 38, 44) in which the metered material filled into the die bores is compressed by the upper and lower press punches (14, 16) to form pellets, and at least one ejector station (50, 70) in which the compressed pellets are ejected, **characterized in that** driving means are provided, with which at least one of the stations can be automatically moved between its operating position and a resting position in which the production process of the rotary press for producing pellets is still possible with the stations that remain in each case in an operating position, but the at least one station located in the resting position has no effect on the production process, wherein the at least one station is further away from the die plate (12) in its resting position in the axial direction of the rotor than in its operating position.

2. The rotary press according to Claim 1, **characterized in that** the rotary press has a housing in which the rotor and the stations are arranged, wherein the at least one station is furthermore located in the resting position inside the housing.

3. The rotary press according to any one of the preceding claims, **characterized in that** the rotary press has a plurality of filling stations (18, 66) and/or a plurality of metering stations (24, 28) and/or a plurality of pressing stations (32, 38, 44), wherein a plurality of the filling stations (18, 66) and/or metering stations (24, 28) and/or pressing stations (32, 38, 44), preferably all of the filling stations (18, 66) and/or metering stations (24, 28) and/or pressing stations (32, 38, 44), can be moved into the resting position.

4. The rotary press according to any one of the preceding claims, **characterized in that** the at least one pressing station (32, 38, 44) has a pressure roller (34, 40, 46) arranged above the die plate (12) and a pressure roller (36, 42, 48) arranged below the die plate (12), wherein the pressure rollers (34, 36, 40, 42, 46, 48) can be moved from their operating position into a resting position in which in the axial direction of the rotor they are further away from the die plate (12) than in their operating position.

5. The rotary press according to any one of the preceding claims, **characterized in that** locking means are provided, with which the at least one station can be locked in its resting position.

6. The rotary press according to any one of the preceding claims, **characterized in that** the rotor is accessible for installation and/or removal if at least one of the stations is located in the resting position.

7. The rotary press according to any one of the preceding claims, **characterized in that** in the course of transferring the at least one station from its operating position into a resting position, at least one cam element assigned to the station is substituted by at least one transitional cam element.

8. A method for operating a rotary press having a rotor, wherein the rotor comprises an upper and a lower punch guide and a die plate (12) arranged between the upper and lower punch guides, furthermore having upper and lower press punches (14, 16) which interact with die bores in the die plate (12), wherein the rotary press comprises a plurality of stations, namely at least one filling station (18, 66) in which material to be compressed is filled into the die bores, at least one metering station (24, 28) in which the material filled into the die bores is metered, at least one pressing station (32, 38, 44) in which the metered material filled into the die bores is compressed by the upper and lower press punches (14, 16) to form pellets, and at least one ejector station (50, 70) in which the compressed pellets are ejected, **characterized by** the steps:
- at least one station is automatically moved by means of driving means from its operating position into a resting position, wherein, in order to move into its resting position, the at least one station is located further away from the die plate (12) in the axial direction of the rotor,
- the production process of the rotary press is subsequently continued with the stations that remain in each case in an operating position, wherein the station located in the resting position has no effect on the production process.

9. The method according to Claim 8, **characterized in that** the at least one station inside a housing of the rotary press, which receives the rotor and the stations, is moved into its resting position.

10. The method according to any one of Claims 8 or 9, **characterized in that**, in order to move into their resting position, an upper pressure roller (34, 40, 46) arranged above the die plate (12) and a lower pressure roller (36, 42, 48) arranged below the die plate (12) of at least one pressing station (32, 38, 44) are located further away from the die plate (12) in the axial direction of the rotor.

11. The method according to any one of Claims 8 to 10, **characterized in that** the at least one station is stopped in its resting position.

12. The method according to any one of Claims 8 to 11, **characterized in that** the rotor is installed and/or removed following the movement of at least one station into the resting position.

13. The method according to any one of Claims 8 to 12, **characterized in that** in the course of transferring the at least one station from its operating position into a resting position, at least one cam element assigned to the station is substituted by at least one transitional cam element.

## Revendications

1. Presse rotative comprenant un rotor, dans laquelle le rotor comporte un guidage de poinçon supérieur et inférieur et un disque à matrice (12) disposé entre les guidages de poinçon supérieur et inférieur, comprenant en outre des poinçons de pressage supérieurs et inférieurs (14, 16) coopérant avec des alésages de matrice du disque à matrice (12), dans laquelle la presse rotative comporte plusieurs stations, notamment au moins une station de remplissage (18, 66) dans laquelle du matériau à comprimer est introduit dans les alésages de matrice, au moins une station de dosage (24, 28) dans laquelle le matériau introduit dans les alésages de matrice est dosé, au moins une station de compression (32, 38, 44) dans laquelle le matériau introduit dans les alésages de matrice et dosé est comprimé par les poinçons de pressage supérieurs et inférieurs (14, 16) pour former des pièces pressées, et au moins une station d'éjection (50, 70) dans laquelle les pièces pressées comprimées sont éjectées, **caractérisée en ce qu'**il est prévu des moyens d'entraînement permettant de déplacer l'une au moins des stations automatiquement entre sa position de fonctionnement et une position de repos, dans laquelle le processus de production de la presse rotative demeure possible pour la fabrication de pièces pressées à l'aide des autres stations respectivement maintenues dans une position de fonctionnement, l'au moins une station en position de repos n'influençant toutefois pas le processus de production, dans laquelle, dans sa position de repos, l'au moins une station se trouve à une plus grande distance du disque à matrice (12) dans la direction axiale du rotor que dans sa position de fonctionnement.

2. Presse rotative selon la revendication 1, **caractérisée en ce que** la presse rotative présente un logement dans lequel sont disposés le rotor et les stations, dans laquelle l'au moins une station se trouve en outre à l'intérieur du logement dans la position de repos.

3. Presse rotative selon l'une des revendications précédentes, **caractérisée en ce que** la presse rotative présente plusieurs stations de remplissage (18, 66) et/ou plusieurs stations de dosage (24, 28) et/ou plusieurs stations de compression (32, 38, 44), dans laquelle plusieurs des stations de remplissage (18, 66) et/ou des stations de dosage (24, 28) et/ou des stations de compression (32, 38, 44), de préférence toutes les stations de remplissage (18, 66) et/ou toutes les stations de dosage (24, 28) et/ou toutes les stations de compression (32, 38, 44) peuvent être déplacées vers la position de repos.

4. Presse rotative selon l'une des revendications précédentes, **caractérisée en ce que** l'au moins une station de compression (32, 38, 44) présente un rouleau de pression (34, 40, 46) disposé au-dessus du disque à matrice (12) et un rouleau de pression (36, 42, 48) disposé en dessous du disque à matrice (12), dans laquelle les rouleaux de pression (34, 36, 40, 42, 46, 48) peuvent être déplacés de leur position de fonctionnement vers une position de repos, dans laquelle ils se trouvent à une plus grande distance du disque à matrice (12) dans la direction axiale du rotor que dans leur position de fonctionnement.

5. Presse rotative selon l'une des revendications précédentes, **caractérisée en ce qu'**il est prévu des moyens d'arrêt permettant d'arrêter l'au moins une station dans sa position de repos.

6. Presse rotative selon l'une des revendications précédentes, **caractérisée en ce que** le rotor est accessible pour un montage et/ou un démontage lorsque l'une au moins des stations se trouve dans la position de repos.

7. Presse rotative selon l'une des revendications précédentes, **caractérisée en ce que** lors du transfert de l'au moins une station hors de sa position de fonctionnement vers une position de repos, au moins un élément courbe attribué à la station est remplacé par au moins un élément courbe de transfert.

8. Procédé pour le fonctionnement d'une presse rotative comprenant un rotor, dans lequel le rotor comporte un guidage de poinçon supérieur et inférieur et un disque à matrice (12) disposé entre les guidages de poinçon supérieur et inférieur, comprenant en outre des poinçons de pressage supérieurs et inférieurs (14, 16) coopérant avec des alésages de matrice du disque à matrice (12), dans lequel la presse rotative comporte plusieurs stations, notamment au moins une station de remplissage (18, 66) dans laquelle du matériau à comprimer est introduit dans les alésages de matrice, au moins une station de dosage (24, 28) dans laquelle le matériau introduit dans les alésages de matrice est dosé, au moins une station de compression (32, 38, 44) dans laquelle le matériau dosé introduit dans les alésages de matrice est comprimé par les poinçons de pressage supérieurs et inférieurs (14, 16) pour former des pièces pressées, et au moins une station d'éjection (50, 70) dans laquelle les pièces pressées comprimées sont éjectées, **caractérisé par** les étapes suivantes :
- au moins une station est déplacée automatiquement hors de sa position de fonctionnement vers une position de repos à l'aide de moyens d'entraînement, dans lequel l'au moins une station est éloignée davantage du disque à matrice (12) dans la direction axiale du rotor pour être déplacée vers sa position de repos,
- le processus de production de la presse rotative est ensuite poursuivi avec les stations respectivement maintenues dans leur position de fonctionnement, dans lequel la station se trouvant dans la position de repos n'influence pas le processus de production.

9. Procédé selon la revendication 8, **caractérisé en ce que** l'au moins une station est déplacée vers sa position de repos à l'intérieur d'un logement de la presse rotative accueillant le rotor et les stations.

10. Procédé selon l'une des revendications 8 ou 9, **caractérisé en ce qu'**un rouleau de pression supérieur (34, 40, 46) disposé au-dessus du disque à matrice (12) et un rouleau de pression inférieur (36, 42, 48) disposé en dessous du disque à matrice (12) d'au moins une station de compression (32, 38, 44) sont éloignés davantage du disque à matrice (12) dans la direction axiale du rotor pour être déplacés vers leur position de repos.

11. Procédé selon l'une des revendications 8 à 10, **caractérisé en ce que** l'au moins une station est arrêtée dans sa position de repos.

12. Procédé selon l'une des revendications 8 à 11, **caractérisé en ce qu'**après le déplacement d'au moins une station vers la position de repos, le rotor est monté et/ou démonté.

13. Procédé selon l'une des revendications 8 à 12, **caractérisé en ce que** lors du transfert de l'au moins une station hors de sa position de fonctionnement vers une position de repos, au moins un élément courbe attribué à la station est remplacé par au moins un élément courbe de transfert.
